# EUROPEAN PATENT SPECIFICATION

(11) **EP 2 621 830 B1**
(45) Date of publication and mention of the grant of the patent: **07.01.2015**
(21) Application number: 11763701.7
(22) Date of filing: 30.09.2011
(51) Int. Cl.: B65D 77/20, B29C 65/00, B29C 65/18, B65D 51/18, B65D 51/24

(54) **PLASTIC LID WITH INTEGRALLY CONNECTED FILM AND CONTAINER COMPRISING SAID LID**
KUNSTSTOFFDECKEL MIT ANGEGOSSENER FOLIE UND BEHÄLTER MIT DIESEM DECKEL
COUVERCLE EN PLASTIQUE À FILM RELIÉ D'UN SEUL BLOC ET RÉCIPIENT COMPRENANT LEDIT COUVERCLE

(30) Priority: 30.09.2010 DK 201070419
(43) Date of publication of application: 07.08.2013
(73) Proprietor: Superfos A/S, 2630 Taastrup (DK)
(72) Inventor: FREDERIKSEN, Lars Skjold, DK-4070 Ejby Kirke Hyllinge (DK)
(74) Representative: Münzer, Marc Eric
(86) International application number: PCT/EP2011/067062
(87) International publication number: WO 2012/041997

(56) References cited:
- EP-A1- 0 665 171
- EP-A1- 1 826 139
- DE-A1-102006 031 292
- FR-A- 1 274 073
- FR-A1- 2 700 493
- US-A- 5 916 615

## Description

The present invention relates to a packaging comprising an injection moulded container and a lid that can be sealed to the container according to the preamble of claim 1. An example of such a packaging is disclosed in EP patent 1 826 139, SE patent 512 612 and EP patent 2 194 002.

In such packagings the lid is made with a sealing zone for joining directly with the container. Thereby, a solid connection and sealing between the lid and the container may be obtained. A flap on the lid as shown in WO patent application 2009156401 may ensure that the lid is easy to remove from the container.

The object of the present invention is to provide a packaging having improved properties by reducing the risk that local defects in the seal may occur, thereby reducing the risk that contaminants may enter the sealed container.

In view of this object, the lid of the present invention in an integral manner includes an upper lid portion in the form of a plastic material film that covers a lower lid portion at least along the lid peripheral edge. The plastic material film includes at least along this peripheral edge region a layer of a plastic material which is dimensionally stable at the heat sealing temperature at which the material of the second portion is fused to the container.

In this way, the risk is prevented or reduced that the material of the second portion is displaced away from the sealing area during the sealing operation which may lead to formation of spots along the container rim where contaminants may enter the packaging and reduce the shelf-life of any product contained therein.

The invention will now be explained in more detail below by reference to an embodiment.
Fig. 1 is a perspective view of a packaging according to the invention, seen from above,
Figs. 2a and 2b are schematic cross-sectional views of a prior art packaging, when the lid is being heat sealed to the container,
Fig. 3 is a schematic partial cross-sectional view of the packaging in Fig. 1, and
Figs. 4a and 4b are partial schematic cross-sectional views of the exemplary embodiment of the invention, shown when the lid is being heat sealed to the container.

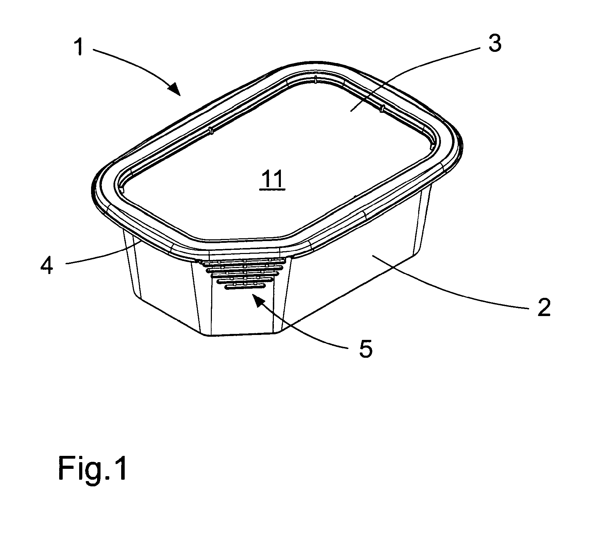

Fig. 1 shows a plastic material packaging 1 according to the present invention. The packaging 1 comprises a container 2 and a lid 3 that is heat sealed to the container 1, numerals 5 and 11 designating a gripping tab for removing the lid 3 and the upper surface of the lid 3, respectively. The container 2 may have any suitable form, such as round, oval, square or rectangular, and its cross-section may be tapering in downward direction

Packagings 1 of this general type are well-known, and may be used for storing various products, such as, for instance, soft dairy products or the like. The container 2 is normally injection moulded and may be provided with a label fused to the outside container side wall through an In-Mould Labelling (IML) process, such as the one disclosed in EP patent 481 090.

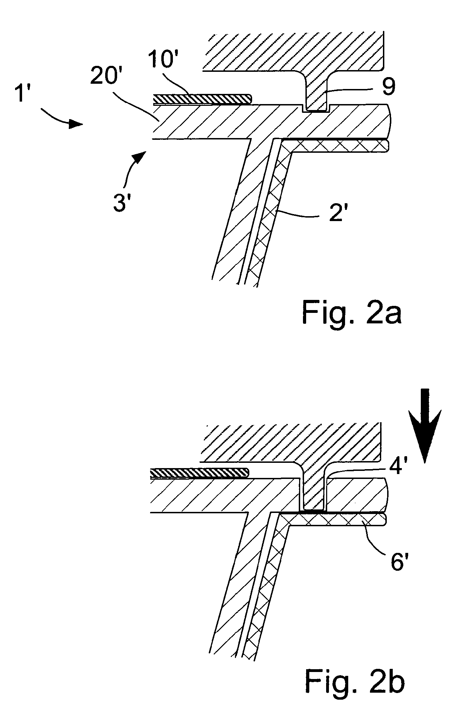

When heat sealing such a lid to a container a problem is sometimes encountered in that locally no seal is established. This is illustrated in figs. 2a and 2b where reference numeral 9 indicates a heating/welding bar applied at an elevated temperature T to the lid 3' so as to fuse the lid 3' and container 2' together along a peripheral edge region 4' of the lid 3' along the rim 6' of the container. On applying the heated welding bar 9 against the lid 3' the plastics material of the lid 3' may locally be displaced away such that no part of the lid 3' is sealed to the rim 6' in spots along the rim 6', as shown in fig. 2b. Hence, there is a potential risk that air or contaminants may enter the packaging 1', thus reducing the shelf-life of any product contained therein. Figs. 2a and 2b show the lid 3' as including a label 10' defining a first portion of the lid 3' and fused to the middle area of a second, lower portion 20' of the lid 3, such as through the IML-process disclosed in FR patent 2 700 493.

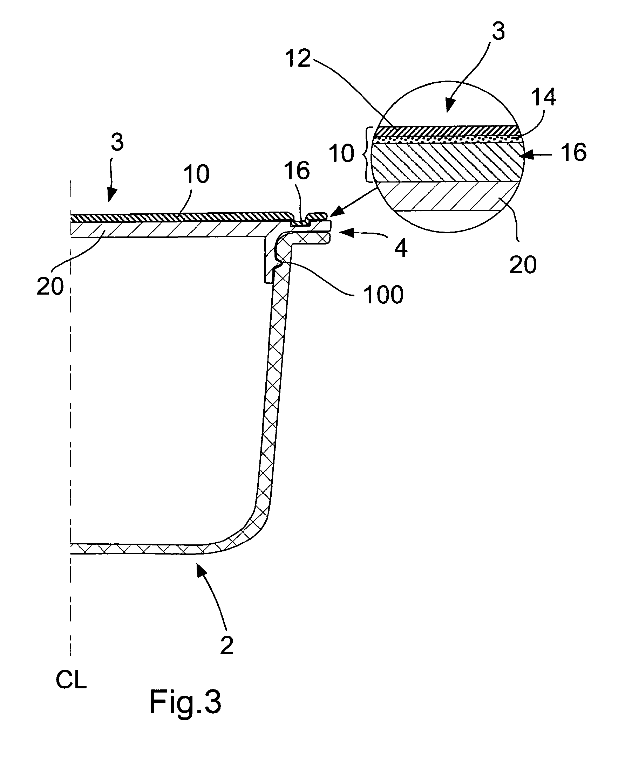

With the aim of solving the above problem, according to the invention the lid 3 is formed as shown in the enlarged view of fig. 3 where a first portion 10 of the lid 3 provided originally in the form of a film is integral with and covers a second, lower portion 20 of the lid 3, at least along the peripheral edge region 4 where the lower portion 20 of the lid 3 is fused to the container 2 rim 6. The first portion 10 of the lid includes at least in and along the peripheral edge region 4 a dimensionally stable layer 12 of a plastic material which is selected such that this layer remains dimensionally stable at the heat sealing temperature T of the heating/welding bar 9.

When sealing the lid 3 to the container 2 the temperature T of the heating/welding bar 9 is selected to be between the melting temperature T₁ of the plastic material of the second portion 20 and the melting point T₂ of the layer 12. By way of example, the material of the second portion 20 may be PP (Polypropylene) which has a melting point T₁ of about 166°C while the dimensionally stable layer 12 may be of PET (polyethylene terephthalate) which has a melting point T₂ higher than 250°C. The temperature T of the heating/welding bar 9 may be selected to be around 200°C.

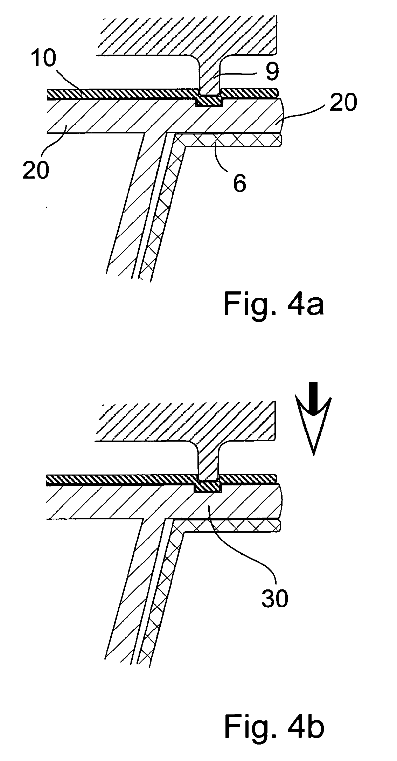

When selecting the temperature T as described above the layer 12 will remain dimensionally stable during the heat sealing and thus define a stable base or backing for the material of the second portion 20 in the aforementioned edge region 4. It has been found that this prevents or reduces the risk that the material of the second portion 20 is displaced away. This effect is illustrated in fig. 4b; the plastic material 30 of the second portion 20 along the peripheral edge 4 is heated to its melting point such that the lid 3 is fused to the rim 6 of the container 2. With the dimensionally stable layer 12 remaining as a backing for the material 30 to adhere to the risk that the plastic material 30 is displaced away is significantly reduced.

The second portion 20 of the lid may either define the lower surface of the lid, or the second portion may be an annular or grid-like structure as shown in fig. 5 of FR patent 2 700 493 whereby the first portion defines the lower surface of the lid 3.

The first portion 10 of the lid may additionally include a barrier layer 14 for controlling the air permeability of the lid 3 and preferably being made of a material selected from the group of SiOx and PVDc. The dimensionally stable layer 12 may conveniently be a polyamide or PET-layer which fulfills the selection criteria when the second portion 20 plastics material is polypropylene PP. Moreover, the first portion 10 may include a layer 16, such as a polypropylene layer, of a material similar or identical to that of the second portion 20 and which is fused to the second portion 20 when manufacturing the lid, such as in an IML-process, where the first portion 10 is inserted into the injection mould following which plastics material is injected, thus moulding the second portion 20 and forming the integral connection between the first and second portions. Preferably, the second portion 20 is made of polypropylene, optionally a polypropylene material containing additives for controlling the strength of the heal seal, as discussed in WO patent application 2007 071252. The lid 3 may include along the peripheral edge region 4 a recess 16 for receiving the welding tool 9; to define this recess the second portion 20 may have a reduced thickness along the peripheral region 4.

The film-like first portion 10 shown in the enlarged view of fig. 3 may be provided as a continous web which is cut into the desired shape and inserted into the mould in an IML-process.

## Claims

1. A packaging (1) comprising an injection moulded plastic material container (2), such as a polypropylene container, and a lid (3), said lid (3) comprising:
a first portion (10) in the form of a plastic material film integrally connected with an injection moulded second portion (20) of a plastic material having a melting point T₁,
said second portion (20) being adapted to be heat sealed to a rim (6) of said container (2) by heating the plastic material (30) of said second portion (20) in a peripheral edge region (4) of said lid (3) to a heat sealing temperature T,
**characterised in that** said first portion (10) covers said second portion (20) at least along said peripheral edge region (4), said first portion (10) including along said peripheral edge region (4) a layer (12) of a plastic material which has a melting point T₂ higher than said melting point T₁ of the plastics material of said second portion (20) and which remains dimensionally stable at the temperature T where said plastic material of said second portion (20) is suitable for said heat sealing.

2. The packaging of claim 1, said second portion (20) defining the surface of said lid (3) that faces the interior of said container (2), said first portion (10) covering all or essentially all of said second portion (20).

3. The packaging of claim 1, said second portion (20) being an annular body, said first portion (10) spanning across said annular body and defining also a surface of said lid that faces the interior of said container (2).

4. The packaging of any of the preceding claims, said first portion (10) carrying indicia relating to the contents of said container (2), said indicia being visible when said lid (3) is sealed to said container (2).

5. The packaging according to claim 4, said indicia being printed on said first portion (10) prior to connecting said first portion (10) with said second portion (20).

6. The packaging according to any of the preceding claims, said second portion (20) and said container (2) including means (100) mechanically engaging each other to secure said lid (3) to said container (2).

7. The packaging according to any of the preceding claims, said layer (12) being a polyamide- or PET material layer.

8. The packaging according to any of the preceding claims, said first portion (10) including a barrier layer (14) for controlling air permeability of said lid (3), said barrier layer (14) preferably being made of a material selected from the group of SiOx and PVDc.

9. The packaging according to any of the preceding claims, said first portion (10) including a further layer (16), such as a polypropylene material layer, fused to said second portion (20) to define said integral connection.

10. The packaging according to any of the preceding claims, said second portion (20) being made of polypropylene, optionally a polypropylene material containing additives for controlling the strength of said heat seal.

11. The packaging according to any of the preceding claims, said lid (3) including along said peripheral edge region (4) a recess (16) such that said second portion (20) has a reduced thickness along said peripheral region (4).

12. A lid for a plastic material container (2), said lid (3) comprising:
a first portion (10) in the form of a plastic material film and
an injection moulded plastic material second portion (20),
said second portion (20) being adapted to be heat sealed to a rim (6) of said container (2) by heating the plastic material of said second portion (20) in a peripheral edge region (4) of said lid (3) to a heat sealing temperature T, said first (10) and second (20) portions being fused together, such as through an IML-process, said first portion (10) defining an upper surface (11) of said lid (3) adapted to face away from said container (2),
**characterised in that** said first portion (10) covers said second portion (20) at least along said peripheral edge region (4), said first portion (10) including along said peripheral edge region (4) a layer (12) of a plastic material, such as polyamide or PET, which remains dimensionally stable at the temperature T where said plastic material of said second portion (20) is suitable for said heat sealing.

13. The lid of claim 12, said second portion (20) plastic material being polypropylene PP.

14. A lid for a plastic material container (2), said lid (3) comprising:
a first portion (10) in the form of a plastic material film and
an injection moulded plastic material second portion (20),
said second portion (20) being adapted to be heat sealed to a rim (6) of said container (2) by heating the plastic material of said second portion (20) in a peripheral edge region (4) of said lid (3) to a heat sealing temperature T, said first (10) and second (20) portions being fused together, such as through an IML-process,
said first portion (10) defining an upper surface (11) of said lid (3) adapted to face away from said container (2), **characterised in that** said first portion (10) covers said second portion (20) at least along said peripheral edge region (4), said first portion (10) including along said peripheral edge region (4) a layer (12) of polyamide or PET, and said second portion (20) plastic material and said container plastic material being polypropylene PP.

15. A method of heat sealing the packaging of any of claims 1-11, wherein said heat sealing temperature is selected to be between said temperature T₁ and T₂.

## Patentansprüche

1. Eine Verpackung (1) aufweisend einen spritzgegossenen Kunststoffmaterialbehälter (2), wie etwa ein Polypropylen-Behälter, und einen Deckel (3), der besagte Deckel (3) aufweisend:
einen ersten Teil (10) in der Form einer Kunststoffmaterialfolie angegossen an einen spritzgegossenen zweiten Teil (20) eines Kunststoffmaterials mit einem Schmelzpunkt T₁,
der besagte zweite Teil (20) ist angepasst, um an einen Rand (6) des besagten Behälters (2) thermisch angeschweißt zu werden durch Erhitzen des Kunststoffmaterials (30) des besagten zweiten Teils (20) in einer peripheren Randregion (4) des besagten Deckels (3) auf eine thermische Anschweißtemperatur T,
**dadurch gekennzeichnet, dass** der besagte erste Teil (10) den besagten zweiten Teil (20) zumindest entlang der besagten peripheren Randregion (4) abdeckt, der besagte erste Teil (10) beinhaltet entlang der besagten peripheren Randregion (4) eine Schicht (12) aus einem Kunststoffmaterial, das einen Schmelzpunkt T₂ hat, der höher als der besagte Schmelzpunkt T₁ des Kunststoffmaterials des besagten zweiten Teils (20) ist, und das bei der Temperatur T, wo das besagte Kunststoffmaterial des besagten zweiten Teils (20) für das besagte thermische Anschweißen geeignet ist, dimensional stabil bleibt.

2. Die Verpackung von Anspruch 1, wobei der besagte zweite Teil (20) die Oberfläche des besagten Deckels (3) definiert, die dem Inneren des besagten Behälters (2) gegenüberliegt, der besagte erste Teil (10) deckt den besagten zweiten Teil (20) ganz oder im Wesentlichen ganz ab.

3. Die Verpackung von Anspruch 1, wobei der besagte zweite Teil (20) ein ringartiger Körper ist, der besagte erste Teil (10) erstreckt sich über den besagten ringartigen Körper und definiert auch eine Oberfläche des besagten Deckels, die dem Inneren des besagten Behälters (2) gegenüberliegt.

4. Die Verpackung von einem der vorangegangenen Ansprüche, wobei der besagte erste Teil (10) Zeichen mit Bezug auf die Inhalte des besagten Behälters (2) trägt, die besagten Zeichen sind sichtbar, wenn der besagte Deckel (3) den besagten Behälter (2) verschließt.

5. Die Verpackung gemäß Anspruch 4, wobei die besagten Zeichen vor einem Verbinden des besagten ersten Teils (10) mit dem besagten zweiten Teil (20) auf den besagten ersten Teil (10) gedruckt werden.

6. Die Verpackung gemäß einem der vorangegangenen Ansprüche, wobei der besagte zweite Teil (20) und der besagte Behälter (2) Mittel (100) beinhalten, die mechanisch ineinandergreifen, um den besagten Deckel (3) an dem besagten Behälter (2) zu sichern.

7. Die Verpackung gemäß einem der vorangegangenen Ansprüche, wobei die besagte Schicht (12) eine Polyamid- oder PET-Materialschicht ist

8. Die Verpackung gemäß einem der vorangegangenen Ansprüche, wobei der besagte erste Teil (10) eine Sperrschicht (14) zum Steuern der Luftdurchlässigkeit des besagten Deckels (3) beinhaltet, die besagte Sperrschicht (14) wird vorzugsweise aus einem Material ausgewählt aus der Gruppe von SiOx und PVDc hergestellt.

9. Die Verpackung gemäß einem der vorangegangenen Ansprüche, wobei der besagte erste Teil (10) eine weitere Schicht (16), wie etwa eine Schicht aus Polypropylenmaterial, beinhaltet, die mit dem besagten zweiten Teil (20) fusioniert ist, um die besagte angegossene Verbindung zu definieren.

10. Die Verpackung gemäß einem der vorangegangenen Ansprüche, wobei der besagte zweite Teil (20) aus Polypropylen, wahlweise einem Polypropylenmaterial, das Zusätze zum Steuern der Stärke der besagten thermischen Anschweißung beinhaltet, hergestellt wird.

11. Die Verpackung gemäß einem der vorangegangenen Ansprüche, wobei der besagte Deckel (3) eine Vertiefung (16) entlang der besagten peripheren Randregion (4) beinhaltet, so dass der besagte zweite Teil (20) eine reduzierte Dicke entlang der besagten peripheren Region (4) hat.

12. Ein Deckel für einen Kunststoffmaterialbehälter (2), der besagte Deckel (3) aufweisend:
einen ersten Teil (10) in der Form einer Kunststoffmaterialfolie und einen zweiten Teil (20) in der Form eines spritzgegossenen Kunststoffmaterials,
der besagte zweite Teil (20) ist angepasst, um an einen Rand (6) des besagten Behälters (2) thermisch angeschweißt zu werden durch Erhitzen des Kunststoffmaterials des besagten zweiten Teils (20) in einer peripheren Randregion (4) des besagten Deckels (3) auf eine thermische Anschweißtemperatur T, die besagten ersten (10) und zweiten (20) Teile werden zusammenfusioniert, wie etwa durch einen IML-Prozess, der besagte erste Teil (10) definiert eine obere Oberfläche (11) des besagten Deckels (3), die angepasst ist, um von dem besagten Behälter (2) weg zu zeigen,
**dadurch gekennzeichnet, dass** der besagte erste Teil (10) den besagten zweiten Teil (20) zumindest entlang der besagten peripheren Randregion (4) abdeckt, der besagte erste Teil (10) beinhaltet entlang der besagten peripheren Randregion (4) eine Schicht (12) aus einem Kunststoffmaterial, wie etwa Polyamid oder PET, das bei der Temperatur T, wo das besagte Kunststoffmaterial des besagten zweiten Teils (20) für das besagte thermische Anschweißen geeignet ist, dimensional stabil bleibt.

13. Der Deckel von Anspruch 12, wobei das besagte Kunststoffmaterial des zweiten Teils (20) Polypropylen PP ist.

14. Ein Deckel für einen Kunststoffmaterialbehälter (2), der besagte Deckel (3) aufweisend:
einen ersten Teil (10) in der Form einer Kunststoffmaterialfolie und einen zweiten Teil (20) in der Form eines spritzgegossenen Kunststoffmaterials,
der besagte zweite Teil (20) ist angepasst, um an einen Rand (6) des besagten Behälters (2) thermisch angeschweißt zu werden durch Erhitzen des Kunststoffmaterials des besagten zweiten Teils (20) in einer peripheren Randregion (4) des besagten Deckels (3) auf eine thermische Anschweißtemperatur T, die besagten ersten (10) und zweiten (20) Teile werden zusammenfusioniert, wie etwa durch einen IML-Prozess, der besagte erste Teil (10) definiert eine obere Oberfläche (11) des besagten Deckels (3), die angepasst ist, um von dem besagten Behälter (2) weg zu zeigen,
**dadurch gekennzeichnet, dass** der besagte erste Teil (10) den besagten zweiten Teil (20) zumindest entlang der besagten peripheren Randregion (4) abdeckt, der besagte erste Teil (10) beinhaltet entlang der besagten peripheren Randregion (4) eine Schicht (12) aus Polyamid oder PET, und das besagte Kunststoffmaterial des zweiten Teils (20) und das besagte Behälterkunststoffmaterial sind Polypropylen PP.

15. Ein Verfahren zum thermischen Anschweißen der Verpackung von einem der Ansprüche 1-11, wobei die besagte thermische Anschweißtemperatur ausgewählt wird, um zwischen der besagten Temperatur T₁ und T₂ zu sein.

## Revendications

1. Emballage (1) comprenant un récipient (2) en matière plastique moulée par injection, notamment un récipient en polypropylène, et un couvercle (3), ledit couvercle (3) comprenant :
une première portion (10) sous la forme d'un film de matière plastique raccordée d'un seul tenant à une seconde portion (20) moulée par injection d'une matière plastique ayant un point de fusion T₁,
ladite seconde portion (20) étant à même d'être scellée à chaud à un rebord (6) dudit récipient (2) en chauffant la matière plastique (30) de ladite seconde portion (20) dans une région de bord périphérique (4) dudit couvercle (3) à une température de scellage à chaud T,
**caractérisé en ce que** ladite première portion (10) recouvre ladite seconde portion (20) au moins de long de ladite région de bord périphérique (4), ladite première portion (10) comprenant le long de ladite région de bord périphérique (4) une couche (12) d'une matière plastique qui a un point de fusion T₂ supérieur audit point de fusion T₁ de la matière plastique de ladite seconde portion (20) et qui reste dimensionnellement stable à la température T, où ladite matière plastique de ladite seconde portion (20) convient audit scellage à chaud.

2. Emballage selon la revendication 1, ladite seconde portion (20) définissant la surface dudit couvercle (3) qui est en regard de l'intérieur dudit récipient (2), ladite première portion (10) couvrant la totalité ou sensiblement la totalité de ladite seconde portion (20).

3. Emballage selon la revendication 1, ladite seconde portion (20) étant un corps annulaire, ladite première portion (10) s'étendant en travers dudit corps annulaire et définissant également une surface dudit couvercle qui est en regard de l'intérieur dudit récipient (2).

4. Emballage selon l'une quelconque des revendications précédentes, ladite première portion (10) portant des marques se référant au contenu du récipient (2), lesdites marques étant visibles lorsque ledit couvercle (3) est scellé audit récipient (2).

5. Emballage selon la revendication 4, lesdites marques étant imprimées sur ladite première portion (10) avant de raccorder ladite première portion (10) à ladite seconde portion (20).

6. Emballage selon l'une quelconque des revendications précédentes, ladite seconde portion (20) et ledit récipient (2) comportant des moyens (100) qui s'engagent mécaniquement l'un sur l'autre pour fixer ledit couvercle (3) audit récipient (2).

7. Emballage selon l'une quelconque des revendications précédentes, ladite couche (12) étant une couche de matériau de type polyamide ou PET.

8. Emballage selon l'une quelconque des revendications précédentes, ladite première portion (10) comprenant une couche barrière (14) pour commander la perméabilité à l'air dudit couvercle (3), ladite couche barrière (14) étant de préférence constituée d'un matériau choisi dans le groupe du SiOx et du PVDc.

9. Emballage selon l'une quelconque des revendications précédentes, ladite première portion (10) comprenant une autre couche (16), telle qu'une couche de matériau de type polypropylène, fusionnée à ladite seconde portion (20) pour définir ledit raccordement d'un seul tenant.

10. Emballage selon l'une quelconque des revendications précédentes, ladite seconde portion (20) étant constituée de polypropylène, éventuellement d'un matériau à base de polypropylène contenant des additifs pour régler la résistance dudit joint thermique.

11. Emballage selon l'une quelconque des revendications précédentes, ledit couvercle (3) comprenant le long de ladite région de bord périphérique (4) un évidement (16) tel que ladite seconde portion (20) ait une épaisseur réduite le long de ladite région périphérique (4).

12. Couvercle pour un récipient de matière plastique (2), ledit couvercle (3) comprenant :
une première portion (10) sous la forme d'un film de matière plastique et une seconde portion (20) en matière plastique moulée par injection,
ladite seconde portion (20) étant à même d'être scellée à chaud à un rebord (6) dudit récipient (2) en chauffant la matière plastique de ladite seconde portion (20) dans une région de bord périphérique (4) dudit couvercle (3) à une température de scellage à chaud T, lesdites première (10) et seconde (20) portions étant fusionnées l'une à l'autre, notamment par un processus IML, ladite première portion (10) définissant une surface supérieure (11) dudit couvercle (3) qui est à même d'être tournée à l'opposé dudit récipient (2),
**caractérisé en ce que** ladite première portion (10) recouvre ladite seconde portion (20) au moins le long de ladite région de bord périphérique (4), ladite première portion (10) comprenant le long de ladite région de bord périphérique (4) une couche (12) d'une matière plastique, telle qu'un polyamide ou le PET, qui reste dimensionnellement stable à la température T, où ladite matière plastique de ladite seconde portion (20) convient audit scellage à chaud.

13. Couvercle selon la revendication 12, la matière plastique de ladite seconde portion (20) étant du polypropylène PP.

14. Couvercle pour un récipient de matière plastique (2), ledit couvercle (3) comprenant :
une première portion (10) sous la forme d'un film de matière plastique et une seconde portion (20) en matière plastique moulée par injection,
ladite seconde portion (20) étant à même d'être scellée à chaud à un rebord (6) dudit récipient (2) en chauffant la matière plastique de ladite seconde portion (20) dans une région de bord périphérique (4) dudit couvercle (3) à une température de scellage à chaud T, lesdites première (10) et seconde (20) portions étant fusionnées l'une à l'autre, notamment par un procédé IML, ladite première portion (10) définissant une surface supérieure (11) dudit couvercle (3) qui est à même d'être tournée à l'opposé dudit récipient (2), **caractérisé en ce que** ladite première portion (10) recouvre ladite seconde portion (20) au moins le long de ladite région de bord périphérique (4), ladite première portion (10) comprenant le long de ladite région de bord périphérique (4) une couche (12) de polyamide ou de PET, et la matière plastique de ladite seconde portion (20) et la matière plastique dudit récipient étant formées de polypropylène PP.

15. Procédé de scellage à chaud de l'emballage de l'une quelconque des revendications 1 à 11, dans lequel ladite température de scellage à chaud est choisie pour se situer entre ladite température T₁ et ladite température T₂.
